# DEMANDE DE BREVET EUROPEEN

(11) **EP 4 768 373 A1**
(43) Date de publication de la demande: **01.07.2026**
(21) Numéro de dépôt: 25221901.9
(22) Date de dépôt: 09.12.2025
(51) Int. Cl.: B62D 25/20, B62D 27/02

(54) **DISPOSITIF D'ASSEMBLAGE D'UN LONGERON ET D'UNE TRAVERSE DE CHÂSSIS D'UN VÉHICULE AUTOMOBILE, ENSEMBLE ET VÉHICULE COMPRENANT UN TEL DISPOSITIF**

(30) Priorité: 10.12.2024 FR 2413778
(71) Demandeur: FLEXIS, 92100 Boulogne-Billancourt (FR)
(72) Inventeur: BAIA, Frederic, 78140 VELIZY-VILLACOUBLAY (FR); FERREIRA, David, 78640 VILLIERS-SAINT-FREDERIC (FR)
(74) Mandataire: Lavoix

(57) **Abrégé**

L'invention concerne un dispositif (1) d'assemblage d'un longeron (2) latéral et d'une traverse (3) de châssis d'un véhicule automobile, ledit dispositif (1) d'assemblage étant formé d'une seule pièce métallique rigide, caractérisé en ce que le dispositif (1) d'assemblage présente une portion (13) de surface d'assemblage par soudage l'un au contact de l'autre, du dispositif (1) d'assemblage et d'un élément (4) d'ancrage d'un train (18) arrière du véhicule automobile au châssis (2,3,21) de ce véhicule automobile.

## Description

### [Domaine technique]

L'invention concerne le domaine automobile et en particulier le domaine technique traitant de la fixation du train arrière du véhicule automobile au châssis de ce véhicule automobile, lorsque le véhicule automobile est un véhicule électrique ou hybride doté de batteries électriques ou d'une pile à combustible associée à au moins une bouteille de combustible, notamment de dihydrogène.

La zone d'ancrage des éléments de liaisons au sol d'un véhicule automobile à la caisse de ce véhicule constitue un point d'entrée des efforts venant des roues sur la caisse. Ces efforts sont importants lorsque le véhicule est chargé et/ou roule sur des routes dégradées et/ou à vive allure. Pour assurer une tenue structurelle acceptable de la caisse sous l'effet de ces efforts, les points A de fixation (plus externe) et B (plus interne) du train arrière de ce véhicule automobile doivent être renforcés.

En particulier, s'agissant d'un véhicule à propulsion électrique ou hybride, dont la propulsion est assurée par au moins un moteur électrique tirant son énergie d'au moins une batterie électrique, l'encombrement de ces batteries électriques impose une optimisation de la position des points interne et externe de fixations du train arrière de ce véhicule automobile. Il en est de même s'agissant d'un véhicule à propulsion électrique muni d'une pile à combustible utilisant du dihydrogène comme combustible stocké dans au moins une bouteille, elle aussi encombrante.

### [État de la technique antérieure]

On connait un véhicule automobile utilitaire dans lequel le châssis présente un gousset d'assemblage d'un longeron et d'une traverse du châssis. Un tel véhicule automobile utilitaire présente en outre un point A de fixation du train arrière de ce véhicule automobile utilitaire, comprenant une chape formée de deux flasques liées entre elles par une pièce de tôle fixée au longeron. La chape n'est pas fixée à la traverse. La rigidité de l'ensemble formé du gousset, de la traverse, du longeron et de la chape de fixation du train arrière n'est donc pas optimisée.

On connait d'autres véhicules automobiles électriques dans lesquels la chape de point A de fixation du train arrière de ce véhicule automobile est rapportée vissée sous la caisse de ces véhicules automobiles. De ce fait, la chape de point A ne participe pas de façon optimale à la tenue structurelle du châssis.

On connait aussi un véhicule automobile hybride dans lequel la chape de point A de fixation du train arrière de ce véhicule automobile hybride est rapportée vissée sous la caisse de ce véhicule automobile hybride. De ce fait, la chape de point A ne participe pas significativement à la tenue structurelle du châssis.

On connait aussi un véhicule automobile électrique dans lequel la chape de point A de fixation du train arrière de ce véhicule automobile électrique est rapportée soudée sous la caisse de ce véhicule automobile hybride. De ce fait, la chape de point A ne participe pas significativement à la tenue structurelle du châssis.

L'invention vise à pallier ces inconvénients.

L'invention vise donc à proposer un dispositif d'assemblage d'un longeron et d'une traverse d'un châssis de véhicule automobile, notamment de véhicule automobile électrique ou hybride, permettant en outre un renfort de la chape de point A.

L'invention vise en particulier à proposer un dispositif d'assemblage permettant aussi un renfort de la liaison entre une traverse et un longeron du châssis d'un véhicule automobile et un bavolet de ce véhicule automobile.

Mais l'invention vise aussi à proposer un tel dispositif d'assemblage de faible encombrement et permettant, du fait de ce faible encombrement, de ménager et/ou augmenter un espace de réception de batteries électriques d'alimentation du moteur d'un véhicule électrique ou hybride.

Mais l'invention vise aussi en alternative à proposer un tel dispositif d'assemblage de faible encombrement et permettant, du fait de ce faible encombrement, de ménager et/ou augmenter un espace de réception de bouteilles de dihydrogène d'alimentation d'une pile à combustible pour le moteur d'un véhicule électrique.

L'invention vise également à proposer un ensemble de faible encombrement comprenant un tel dispositif d'assemblage et permettant de renforcer structurellement le châssis du véhicule automobile et/ou permettant, du fait de ce faible encombrement, de ménager et/ou augmenter un espace de réception de batteries électriques d'alimentation du moteur d'un véhicule électrique ou hybride ou de bouteilles de dihydrogène d'alimentation d'une pile à combustible pour le moteur d'un véhicule électrique.

L'invention vise également à proposer un véhicule automobile, notamment un véhicule électrique ou hybride, permettant une augmentation en longueur d'un volume de réception et d'implantation de batteries électriques ou de bouteilles de dihydrogène d'alimentation d'une pile à combustible.

### [Exposé de l'invention]

L'invention vise donc un dispositif d'assemblage -ou « gousset »- d'un longeron latéral et d'une traverse de châssis d'un véhicule automobile, ledit dispositif d'assemblage étant formé d'une seule pièce métallique rigide, caractérisé en ce que le dispositif d'assemblage présente une portion de surface d'assemblage par soudage l'un au contact de l'autre, du dispositif d'assemblage et d'un élément d'ancrage d'un train arrière du véhicule automobile au châssis de ce véhicule automobile.

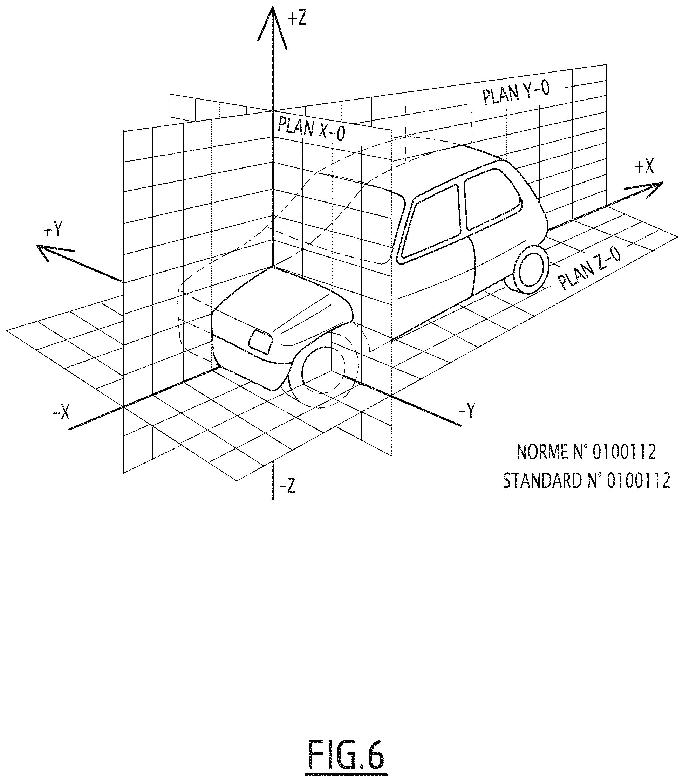

Dans tout le texte :
- les termes « avant », « arrière », « droit(e) », « gauche », « haut », « bas » et « latéral(e) » sont à considérer par rapport à un véhicule en état normal de progresser,
- le repère XYZ renvoie à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté latéralement de la gauche vers la droite du véhicule, l'axe Z désigne la direction verticale, et est orienté du bas vers le haut. Un tel repère orthonormé direct XYZ selon la norme n°0100112 est représenté schématiquement en figure 6.

Dans le domaine automobile, les longerons latéraux et les traverses formant le châssis sont des éléments constitutifs de la rigidité de la structure du véhicule automobile. L'axe d'allongement des longerons latéraux s'étend globalement selon l'axe X du repère orthonormé direct XYZ classiquement utilisé en conception automobile et l'axe d'allongement des traverses s'étend globalement selon l'axe Y de ce même repère orthonormé direct XYZ, longerons latéraux et traverses s'étendant sensiblement dans un même plan orthogonal à l'axe Z de ce même repère orthonormé direct XYZ.

Selon l'invention, le dispositif d'assemblage est un dispositif d'assemblage multifonctionnel permettant de réaliser un assemblage par soudage rigide et compact d'un longeron latéral et d'une traverse de châssis et au moins d'un élément d'ancrage de train arrière du véhicule automobile. Un tel dispositif d'assemblage par soudage permet de renforcer la rigidité de la structure du véhicule automobile et permet d'assurer la tenue de cette structure soumise aux efforts venant des roues et transmis à la caisse par les éléments de liaisons au sol. Mais un tel dispositif d'assemblage compact permet aussi de procurer un ancrage de train arrière luimême compact, avec des points ancrage de train arrière ne s'étendant pas, vers l'avant, au-delà de la traverse et de façon à libérer un espace s'étendant à l'avant de la traverse et alloué aux batteries électriques ou aux bouteilles de dihydrogène d'alimentation d'une pile à combustible pour ce véhicule électrique.

Selon l'invention, le dispositif d'assemblage présente une face principale globalement concave délimitant les volumes de réception du longeron latéral et de la traverse. Cette face principale concave, est une face supérieure selon l'axe Z du repère orthonormé direct lorsque le dispositif d'assemblage est à l'état assemblé sur le véhicule automobile. Selon l'invention, le dispositif d'assemblage présente une face principale globalement convexe, opposée à la face principale concave, formant une face inférieure selon l'axe Z du repère orthonormé direct lorsque le dispositif d'assemblage est à l'état assemblé sur le véhicule automobile.

Selon certains modes de réalisation, la portion de surface d'assemblage par soudage l'un au contact de l'autre, du dispositif d'assemblage et de l'élément d'ancrage du train arrière est une portion de surface de la face principale concave du dispositif d'assemblage. Selon certains autres modes de réalisation, la portion de surface d'assemblage par soudage l'un au contact de l'autre, du dispositif d'assemblage et de l'élément d'ancrage du train arrière est une portion de surface de la face principale convexe du dispositif d'assemblage.

Selon l'invention, le dispositif d'assemblage est conformé de façon à pouvoir être fixé par soudage, notamment de façon à être fixé par soudage, avec l'élément d'ancrage du train arrière du véhicule automobile au châssis de ce véhicule automobile. Le dispositif d'assemblage selon l'invention constitue un « nœud de structure » permettant un transfert des efforts venant des éléments de liaison du véhicule automobile au sol, au moins au longeron latéral et à la traverse du châssis et à la caisse du véhicule automobile. Ces efforts sont d'autant plus importants lorsque le véhicule est chargé ou lorsque le véhicule est un véhicule électrique ou hybride de masse augmentée du fait de batteries électriques et/ou de bouteilles de dihydrogène d'alimentation d'une pile à combustible. Ces efforts sont d'autant plus importants lorsque le véhicule roule à vive allure et/ou sur une voie de circulation dont le revêtement est dégradé.

Selon certains modes de réalisation, le dispositif d'assemblage est formé par emboutissage d'une tôle. Tout autre moyen d'obtention d'une telle pièce métallique rigide est cependant possible. Selon certains modes de réalisation, le dispositif d'assemblage est formé d'acier. Selon ces modes de réalisation, le dispositif d'assemblage est formé d'une pièce métallique rigide d'épaisseur sensiblement constante.

Selon certains modes de réalisation, le dispositif d'assemblage selon l'invention forme un dégagement, dit dégagement longitudinal, adapté pour pouvoir recevoir ledit longeron latéral, pour pouvoir coopérer par coopération de forme avec ledit longeron latéral et pour pouvoir solidariser le dispositif d'assemblage et ledit longeron latéral par soudage du dispositif d'assemblage et dudit longeron latéral l'un avec l'autre.

Ledit dégagement longitudinal s'étend longitudinalement, selon un axe sensiblement parallèle à l'axe X du repère orthonormé direct XYZ (classiquement utilisé en conception automobile) et représenté schématiquement en figure 6, lorsque le dispositif d'assemblage est disposé de façon à coopérer avec ledit longeron, avec la traverse et au moins avec l'élément d'ancrage du train arrière du véhicule automobile.

Selon certains modes de réalisation, ledit dégagement longitudinal du dispositif d'assemblage est conformé pour coopérer avec -notamment pour pouvoir être soudé à- deux faces principales adjacentes libres dudit longeron avec lequel le dispositif d'assemblage est destiné à coopérer. Selon ces modes de réalisation, les deux faces principales adjacentes libres dudit longeron sont une face principale interne dudit longeron et une face principale inférieure dudit longeron selon le repère XYZ orthonormé direct.

Selon certains modes de réalisation, ledit dégagement longitudinal du dispositif d'assemblage présente un bord, dit bord de longeron, destiné à coopérer par contact avec le longeron latéral, ledit bord de longeron formant par repliement, au moins une première extension sensiblement plane disposée pour pouvoir être soudée à une première face des deux faces adjacentes libres du longeron avec lequel le dispositif d'assemblage est destiné à coopérer. Selon ces modes de réalisation, la première face des deux faces adjacentes libres du longeron latéral est une face principale interne du longeron latéral. Selon ces modes de réalisation, la première face des deux faces adjacentes libres du longeron latéral est une face principale dudit longeron latéral sensiblement orthogonale à l'axe Y du repère orthonormé direct. On entend par surface sensiblement orthogonale à l'axe Y du repère orthonormé direct, une surface dont la normale forme avec l'axe Y un angle de valeur inférieure à 10° compte tenu de la section droite transversale de forme trapézoïdale dudit longeron.

Selon certains modes de réalisation, ledit bord de longeron forme au moins une deuxième extension sensiblement plane disposée pour coopérer avec une deuxième face, distincte de la première face, des deux faces principales adjacentes libres du longeron latéral avec lequel le dispositif d'assemblage est destiné à coopérer. Selon ces modes de réalisation, la deuxième face des deux faces adjacentes libres du longeron latéral est une face principale inférieure du longeron latéral. Selon ces modes de réalisation, la deuxième face des deux faces adjacentes libres du longeron latéral est une face principale du longeron latéral, s'étendant dans un plan sensiblement orthogonal à l'axe Z du repère orthonormé direct. On entend par plan sensiblement orthogonal à l'axe Z du repère orthonormé direct, une surface dont la normale forme avec l'axe Z un angle de valeur inférieure à 10°.

Selon certains modes de réalisation, ledit dégagement longitudinal du dispositif d'assemblage présente un bord, dit bord de longeron, destiné à être en contact avec ledit longeron et muni d'extensions sensiblement planes, dont :
- au moins une première extension -notamment une paire de premières extensions opposées l'une à l'autre-, ladite au moins une première extension -notamment la paire de premières extensions- étant adaptée pour coopérer avec une première face des deux faces principales adjacentes libres du longeron avec lequel le dispositif d'assemblage est destiné à coopérer, et
- au moins une deuxième extension -notamment une paire de premières extensions opposées l'une à l'autre-, ladite au moins une deuxième extension -notamment la paire de deuxièmes extensions- étant adaptée pour coopérer avec une deuxième face des deux faces principales adjacentes libres du longeron avec lequel le dispositif d'assemblage est destiné à coopérer. Selon certains modes de réalisation, la première face des deux faces adjacentes libres du longeron est une face principale interne dudit longeron. Selon certains modes de réalisation, la deuxième face des deux faces adjacentes libres du longeron est une face principale inférieure (orthogonale à l'axe Z du repère orthonormé direct) dudit longeron.

Selon certains modes de réalisation, ladite au moins une première extension et ladite au moins une deuxième extension coopèrent avec les première et deuxième faces principales adjacentes libres du longeron par une portion de face principale concave du dispositif d'assemblage. Rien n'empêche cependant de prévoir, selon d'autres modes de réalisation que ladite au moins une première extension et ladite au moins une deuxième extension coopèrent avec les première et deuxième faces principales adjacentes libres du longeron par une portion de face principale convexe du dispositif d'assemblage.

Ledit bord de longeron dudit dégagement longitudinal délimite d'avant en arrière (selon l'axe X du repère orthonormé direct) un volume de réception du longeron latéral. Le volume de réception du longeron latéral présente une hauteur s'étendant selon l'axe Z du repère orthonormé direct adaptée pour coopérer avec un longeron latéral sensiblement de même hauteur selon l'axe Z du repère orthonormé direct.

Selon certains modes de réalisation, ledit dégagement longitudinal est conformé pour pouvoir recevoir le longeron latéral et être traversé par ledit longeron latéral selon l'axe X du repère orthonormé direct.

Selon certains modes de réalisation, ledit dégagement longitudinal du dispositif d'assemblage présente une portion de bord (qui n'est pas destinée à être mise en contact avec ledit longeron latéral), dit bord d'ancrage du train arrière, destiné à être en contact avec l'élément d'ancrage du train arrière du véhicule automobile et à fixer par soudage le dispositif d'assemblage et l'élément d'ancrage du train arrière du véhicule automobile. Selon certains modes de réalisation, ledit bord d'ancrage de train arrière s'étend dans un plan sensiblement orthogonal à l'axe Y du repère orthonormé direct et de façon que ledit bord d'ancrage du train arrière ne s'étende pas en regard du longeron. On entend par plan sensiblement orthogonal à l'axe Y du repère orthonormé direct, un plan dont la normale forme avec l'axe Y un angle de valeur inférieure à 10°.

Selon certains modes de réalisation, le dispositif d'assemblage selon l'invention forme une rainure, dite rainure transversale, adaptée pour pouvoir recevoir la traverse, pour coopérer en coopération de forme avec la traverse et pour pouvoir solidariser le dispositif d'assemblage avec la traverse par soudage du dispositif d'assemblage et de la traverse l'un avec l'autre. Ladite rainure transversale détermine un volume de réception de la traverse. Ladite rainure transversale du dispositif d'assemblage présente un axe d'allongement sensiblement parallèle à l'axe Y du repère orthonormé direct lorsque le dispositif d'assemblage est en position d'assemblage dans le véhicule automobile.

Selon l'invention, ladite rainure transversale et ledit dégagement longitudinal du dispositif d'assemblage forment un « T » s'étendant dans un plan orthogonal à l'axe Z du repère orthonormé direct. Ladite rainure transversale et ledit dégagement longitudinal présentent des axes de réception de la traverse et respectivement du longeron latéral orthogonaux entre eux. Selon certains modes de réalisation, les axes de réception de la traverse et respectivement du longeron latéral s'étendent dans deux plans parallèles distincts sensiblement orthogonaux à l'axe Z du repère orthonormé direct. Selon certains modes de réalisation, les axes de réception de la traverse et respectivement du longeron latéral s'étendent dans un même plan sensiblement orthogonal à l'axe Z du repère orthonormé direct.

Selon certains modes de réalisation, ladite rainure transversale est conformée pour coopérer avec trois faces principales adjacentes libres de la traverse avec laquelle le dispositif d'assemblage est destiné à coopérer et pour pouvoir être soudée à la traverse. Selon ces modes de réalisation, les trois faces principales adjacentes libres de ladite traverse sont une face principale avant (-X) de ladite traverse, une face principale arrière (+X) de ladite traverse et une face principale inférieure (-Z) de ladite traverse selon le repère XYZ orthonormé direct.

Selon certains modes de réalisation, ladite rainure transversale présente un bord, dit bord de traverse, délimitant vers le haut (+Z) le volume de réception de la traverse. Ledit bord de traverse présente une extension avant (selon l'axe -X) sensiblement plane, s'étendant horizontalement et dans un plan sensiblement orthogonal à l'axe Z du repère orthonormé direct et disposée pour pouvoir coopérer et être soudée avec un rebord avant de la traverse-.Ledit bord de traverse présente une extension arrière (selon l'axe +X) sensiblement plane, s'étendant horizontalement et dans un plan sensiblement orthogonal à l'axe Z du repère orthonormé direct et disposée pour pouvoir coopérer et être soudée avec un rebord arrière de la traverse.

Selon certains modes de réalisation, ladite rainure transversale présente selon son axe d'allongement sensiblement parallèle à l'axe Y du repère orthonormé direct, un premier tronçon d'extrémité terminale de forme cylindrique et présentant des extensions avant et arrière disposées pour coopérer avec les rebords de la traverse. Dans certains modes de réalisation, ladite rainure transversale présente selon son axe d'allongement sensiblement parallèle à l'axe Y du repère orthonormé direct, un deuxième tronçon prolongeant le premier tronçon, évasé à partir du premier tronçon et présentant des extensions avant et arrière disposées pour pouvoir être soudées avec un rebord du longeron latéral. Selon ces modes de réalisation, le deuxième tronçon est évasé à partir du premier tronçon vers l'avant et vers l'arrière selon l'axe X et vers le bas selon l'axe Z. La rigidité du dispositif d'assemblage et de la structure du véhicule automobile est renforcée.

Selon certains modes de réalisation, au moins une extension dudit bord de traverse est destinée à être en contact avec la traverse et à être soudée à la traverse par une portion de face principale concave du dispositif d'assemblage.

Ledit bord de traverse de ladite rainure transversale délimite un volume de réception de la traverse. Le volume de réception de la traverse présente une hauteur s'étendant selon l'axe Z du repère orthonormé direct adaptée pour coopérer avec une traverse sensiblement de même hauteur selon l'axe Z du repère orthonormé direct. Selon certains modes de réalisation, la hauteur de la traverse étant inférieure à la hauteur du longeron latéral, la hauteur du volume de réception de la traverse est inférieure à la hauteur du volume de réception du longeron latéral. Le volume de réception de la traverse présente une largeur s'étendant selon l'axe X du repère orthonormé direct adaptée pour coopérer avec une traverse sensiblement de même largeur, selon l'axe X du repère orthonormé direct.

Selon certains modes de réalisation, ladite rainure transversale est conformée pour pouvoir recevoir une extrémité longitudinale de la traverse, l'extrémité longitudinale de la traverse étant sensiblement en butée avec le longeron latéral selon l'axe Y du repère orthonormé direct.

Selon certains modes de réalisation, le dispositif d'assemblage présente une surface de solidarisation par soudage du dispositif d'assemblage avec un organe d'appui arrière pour un cric de levage du véhicule automobile. La rigidité de la structure du véhicule automobile est renforcée et la compacité du dispositif d'assemblage et de l'élément d'ancrage du train arrière au châssis est préservée.

Selon certains modes de réalisation, la surface de solidarisation du dispositif d'assemblage avec l'organe d'appui arrière pour un cric de levage est sensiblement plane et s'étend sur une portion de face principale convexe du dispositif d'assemblage -opposée à la face principale concave du dispositif d'assemblage-, la partie du dispositif d'assemblage présentant cette portion de face principale convexe limitant le volume de réception du longeron. Selon certains modes de réalisation, la surface de solidarisation s'étend sensiblement dans un plan orthogonal à l'axe Z du repère orthonormé direct et est sensiblement horizontale.

Avantageusement, la portion de surface du dispositif selon l'invention, d'assemblage par soudage avec l'élément d'ancrage de train arrière du véhicule automobile, au châssis de ce véhicule automobile est distincte des portions de surface d'assemblage du dispositif selon l'invention respectivement avec le longeron latéral et la traverse. La portion de surface, dite surface d'ancrage du train arrière, du dispositif d'assemblage destinée à être soudée à l'élément d'ancrage de train arrière s'étend dans un plan, dit plan d'ancrage du train arrière, sensiblement orthogonal à l'axe Y du repère orthonormé direct, à l'une des extrémités terminales du dispositif d'assemblage (selon cet axe Y) opposée à l'extrémité terminale de réception de la traverse. Ladite surface d'ancrage du train arrière est formée d'au moins une extension s'étendant par repliement dans ledit plan d'ancrage à partir dudit bord d'ancrage. Selon certains modes de réalisation, chaque extension formant ladite surface d'ancrage du train arrière s'étend dans un plan orthogonal à la surface de solidarisation du dispositif d'assemblage avec l'organe d'appui arrière pour cric de levage. La rigidité du dispositif d'assemblage et de la structure du véhicule automobile est renforcée et la compacité du dispositif d'assemblage et de l'élément d'ancrage du train arrière au châssis est préservée.

Dans un véhicule automobile comprenant un dispositif d'assemblage selon l'invention, chaque extension formant ladite surface d'ancrage du train arrière est fixée par soudage à l'élément d'ancrage. Dans certains modes de réalisation, l'élément d'ancrage du train arrière du véhicule automobile est en outre fixé par soudage à une troisième face principale libre du longeron.

Selon certains modes de réalisation, l'élément d'ancrage du train arrière au châssis du véhicule automobile est un boitier supportant un palier de point A du véhicule, coopérant avec une bague cylindrique d'articulation d'extrémité de bras de suspension de train arrière du véhicule automobile.

Selon certains modes de réalisation, l'élément d'ancrage comprend une ailette interne (selon l'axe Y du repère orthonormé direct) assemblée par soudure au dispositif d'assemblage et un renfort externe (selon l'axe Y du repère orthonormé direct), l'ailette interne et le renfort externe de l'élément d'ancrage étant adaptés pour recevoir et maintenir un palier d'extrémité de fixation d'un bras de suspension du train arrière au châssis du véhicule automobile, l'organe d'appui et le renfort externe étant montés solidaires l'un de l'autre par soudage. Selon certains modes de réalisation, l'organe d'appui et l'ailette interne sont montés solidaires l'un de l'autre par soudage. Selon certains modes de réalisation, l'ailette interne et le renfort externe de l'élément d'ancrage constituent une interface d'ancrage d'un bras d'un triangle de suspension. L'ailette interne et le renfort externe ménagent entre eux une distance de valeur d'entrefer adaptée pour pouvoir recevoir l'extrémité de bras de suspension et supportent un arbre adapté pour coopérer avec le palier du bras de suspension.

Selon certains modes de réalisation, l'organe d'appui est monté solidaire par soudage d'au moins un organe choisi parmi un bavolet et un brancard de ce véhicule automobile. Selon ces modes de réalisation, le dispositif d'assemblage permet une continuité structurelle entre :
- les éléments de structure longitudinaux tels que le longeron latéral et le bavolet,
- les éléments de structure transversaux tels que la traverse, et
- les éléments de structure verticaux tels que le brancard
formant un nœud de structure.

L'invention s'étend aussi à un ensemble comprenant un dispositif d'assemblage selon l'invention, caractérisé en ce qu'il comprend en outre :
- un élément d'ancrage d'un train arrière de ce véhicule automobile au châssis du véhicule automobile, l'élément d'ancrage étant monté solidaire du dispositif d'assemblage par soudage ;
- un organe d'appui arrière pour un cric de levage du véhicule automobile, l'organe d'appui étant monté solidaire du dispositif d'assemblage par soudage.

Selon certains modes de réalisation, au moins l'un du dispositif d'assemblage, de l'élément d'ancrage du train arrière et de l'organe d'appui arrière est formé d'acier. Selon certains modes de réalisation, chacun du dispositif d'assemblage, de l'élément d'ancrage du train arrière et de l'organe d'appui arrière sont formés d'acier. L'ensemble selon l'invention est un ensemble de haute résistance mécanique. L'ensemble selon l'invention permet de former une liaison efficace, rigide et compacte entre la traverse, l'organe d'appui et le bavolet mais aussi de renforcer la liaison de cet ensemble avec l'élément d'ancrage du train arrière en une liaison compacte permettant de limiter son encombrement et de ménager de l'espace pour une implantation de batterie électrique ou de bouteille(s) de combustible -notamment de dihydrogène- pour une pile à combustible.

L'invention s'étend aussi à un véhicule automobile comprenant au moins un dispositif d'assemblage selon l'invention ou au moins un ensemble selon l'invention.

Selon certains modes de réalisation, le véhicule automobile est un véhicule électrique ou hybride.

Selon certains modes de réalisation, le véhicule automobile est un véhicule électrique doté de batteries électriques ou d'une pile à combustible alimentée par au moins une bouteille de dihydrogène.

Selon certains modes de réalisation, le véhicule automobile est un véhicule utilitaire. Selon certains modes de réalisation, le véhicule automobile est un véhicule dans lequel le groupe motopropulseur est disposé à l'avant. Rien n'empêche de prévoir cependant que le véhicule automobile est un véhicule dans lequel le groupe motopropulseur est disposé à l'arrière.

Selon certains modes de réalisation, le véhicule automobile est un véhicule à propulsion arrière. Selon certains modes de réalisation, le véhicule automobile est un véhicule à traction avant. Selon certains modes de réalisation, le véhicule automobile est un véhicule à transmission intégrale.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] la figure 1 est une vue en perspective de la face principale convexe d'un dispositif d'assemblage selon l'invention,
[Fig. 2] la figure 2 est une vue en perspective de la face principale concave d'un dispositif d'assemblage selon l'invention,
[Fig. 3] la figure 3 est une représentation en coupe droite transversale (selon un plan orthogonal à l'axe X du repère orthonormé direct de la figure 6) et en vue arrière d'un détail d'un véhicule, d'un ensemble et d'un dispositif d'assemblage selon l'invention,
[Fig. 4] la figure 4 est une vue à plat par-dessous d'un détail d'un véhicule automobile selon l'invention, dans lequel les éléments de liaisons au sol du véhicule automobile ne sont pas représentés,
[Fig. 5] la figure 5 est une vue en perspective et de dessous d'un détail d'un véhicule automobile selon l'invention, dans lequel les éléments de liaisons au sol du véhicule automobile ne sont pas représentés, et
[Fig. 6] la figure 6 est une représentation d'un repère orthonormé direct XYZ classiquement utilisé en conception automobile.

### [Description des modes de réalisation]

Pour les besoins de la description, on se référera à un repère orthonormé direct XYZ selon la norme n°0100112 représenté en figure 6, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut.

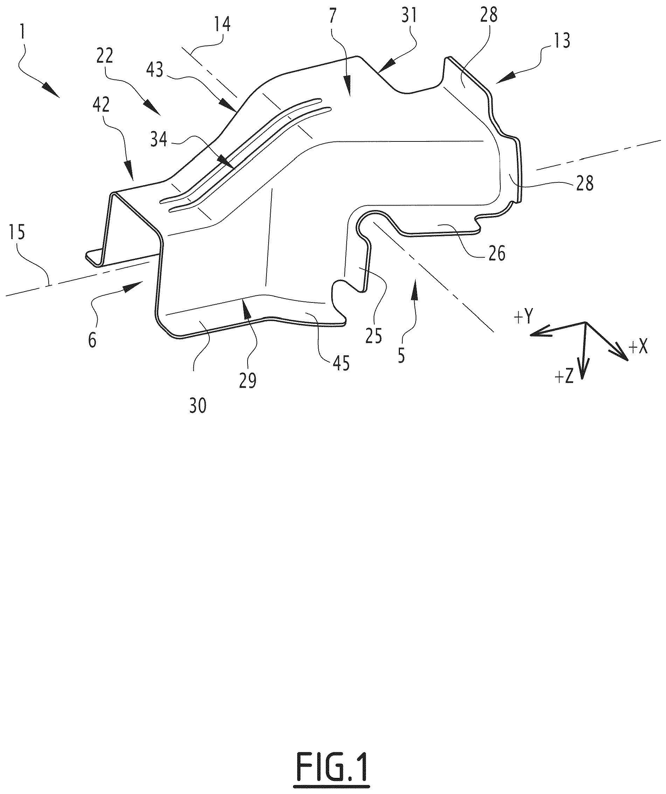

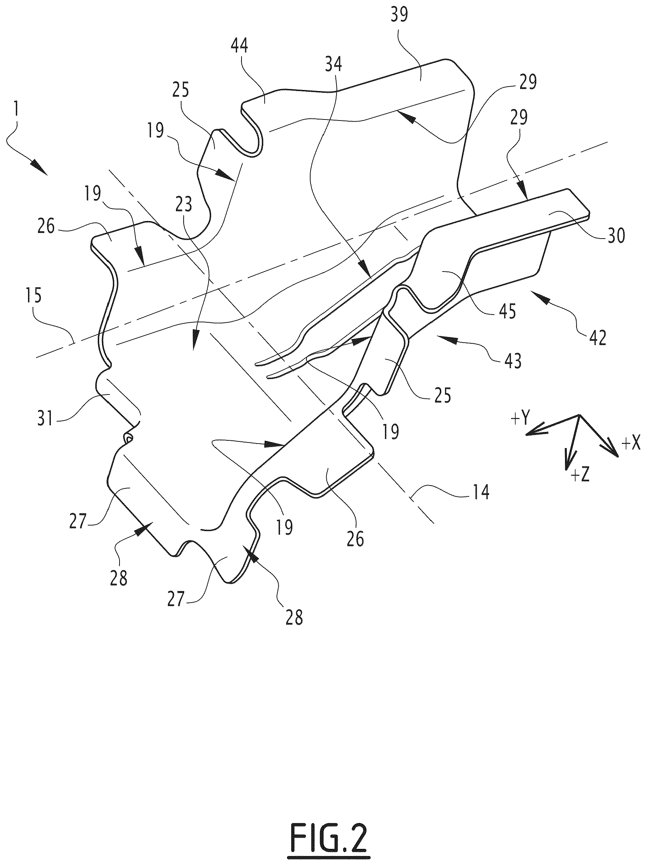

Le dispositif 1 d'assemblage ou gousset représenté en perspective en figure 1 par sa face 22 convexe et en figure 2 par sa face 23 concave est formé d'une seule pièce de tôle d'acier emboutie. Le dispositif 1 d'assemblage formé par emboutissage d'une plaque de tôle présente une forme repliée choisie pour lui conférer la rigidité en flexion requise. En effet, le dispositif 1 d'assemblage selon l'invention est destiné à permettre un assemblage rigide d'éléments de châssis et de train arrière d'un véhicule automobile, ces éléments de châssis et de tarin arrière étant fortement sollicités mécaniquement du fait de leur liaison avec les roues du véhicule automobile en déplacement. Les plis impartis à la tôle d'acier emboutie du dispositif 1 d'assemblage selon l'invention, notamment mais non exclusivement les plis établis entre deux portions de parois orthogonales ou sensiblement orthogonales, constituent des renforts de rigidité en flexion du dispositif 1 d'assemblage selon les trois axes XYZ du repère orthonormé direct. En outre, le dispositif 1 d'assemblage selon l'invention est formé d'une seule pièce compacte permettant de regrouper en un volume optimisé et minimal, les moyens d'assemblage d'un longeron 2 latéral, d'une traverse 3 et au moins d'un élément 4 d'ancrage de train arrière du véhicule automobile. Ce volume optimisé permet de ménager un espace augmenté de réception d'élément(s) de batterie électrique et/ou de bouteille(s) de combustible d'alimentation d'une pile à combustible.

Le dispositif 1 d'assemblage forme une rainure, dite rainure 6 transversale, adaptée pour pouvoir recevoir une traverse (non représentée en figures 1 et 2), pour coopérer en coopération de forme avec la traverse et pour pouvoir solidariser le dispositif 1 d'assemblage avec la traverse par soudage du dispositif 1 d'assemblage et de la traverse 3 l'un avec l'autre. Ladite rainure 6 transversale s'étend selon un axe d'allongement identifié en figure 1 et 2 par la référence 15. Ladite rainure 6 transversale présente un premier tronçon 42 d'extrémité terminale libre de ladite rainure 6 transversale et de section droite transversale (orthogonale à l'axe 15 d'allongement de ladite rainure transversale, l'axe 15 d'allongement étant parallèle à l'axe Y du repère orthonormé direct) de forme sensiblement rectangulaire. Les dimensions du premier tronçon 42 de ladite rainure 6 transversale sont ajustées aux dimensions de la traverse. Le premier tronçon 42 de ladite rainure 6 transversale présente un bord, dit bord 29 de traverse, délimitant vers le haut (+Z) un volume de réception de la traverse. Ledit bord 29 de traverse présente une extension 30 avant (selon l'axe -X) sensiblement plane, s'étendant horizontalement et dans un plan sensiblement orthogonal à l'axe Z du repère orthonormé direct et disposée pour pouvoir être soudée avec un rebord 40 avant de la traverse-.Ledit bord 29 de traverse présente une extension 39 arrière (selon l'axe +X) sensiblement plane, s'étendant horizontalement et dans un plan sensiblement orthogonal à l'axe Z du repère orthonormé direct et disposée pour pouvoir être soudée avec un rebord 41 arrière de la traverse.

Ladite rainure 6 transversale présente un deuxième tronçon 43 évasé, prolongeant vers l'extérieur (+Y) le premier tronçon 42 selon l'axe 15 de ladite rainure 6 transversale et de réception de la traverse 3. Le deuxième tronçon 43 est évasé vers l'avant et vers l'arrière selon l'axe X et vers le bas selon l'axe Z. La rigidité du dispositif 1 d'assemblage et de la structure du véhicule automobile est ainsi renforcée. Le deuxième tronçon 43 évasé présente des extensions avant 44 et arrière 45 disposées pour pouvoir être soudées chacune avec un rebord 46 du longeron latéral. Les plis formés entre le premier tronçon 42 et le deuxième tronçon 43 du dispositif 1 d'assemblage et par les extensions 30,39 avant et arrière contribuent au renforcement de la rigidité du dispositif 1 d'assemblage selon l'invention selon les trois axes XYZ du repère orthonormé direct.

Le dispositif 1 d'assemblage forme aussi un dégagement, dit dégagement 5 longitudinal, adapté pour pouvoir recevoir ledit longeron latéral (non représenté en figures 1 et 2), pour pouvoir coopérer par coopération de forme avec un longeron latéral et pour pouvoir solidariser le dispositif 1 d'assemblage et le longeron latéral par soudage du dispositif d'assemblage et du longeron latéral l'un avec l'autre. Ledit dégagement 5 longitudinal s'étend selon un axe d'allongement identifié en figure 1 et 2 par la référence 14. Ledit dégagement 5 longitudinal est conformé pour pouvoir être soudé à- deux faces principales adjacentes libres du longeron latéral avec lequel le dispositif d'assemblage est destiné à coopérer. Selon ces modes de réalisation, les deux faces principales adjacentes libres dudit longeron sont une face principale interne dudit longeron et une face principale inférieure dudit longeron selon le repère XYZ orthonormé direct. Ledit dégagement longitudinal du dispositif 1 d'assemblage représenté en figure 1 et 2 présente un bord, dit bord 19 de longeron, destiné à coopérer par contact avec le longeron latéral, ledit bord 19 de longeron formant par repliement, au moins une première extension 25 sensiblement plane disposée pour pouvoir être soudée à une première face des deux faces adjacentes libres du longeron avec lequel le dispositif 1 d'assemblage est destiné à coopérer. Selon ces modes de réalisation, la première face des deux faces adjacentes libres du longeron latéral est une face principale interne du longeron latéral. Selon ces modes de réalisation, la première face des deux faces adjacentes libres du longeron latéral est une face principale dudit longeron latéral sensiblement orthogonale à l'axe Y du repère orthonormé direct. Ledit bord 19 de longeron forme au moins une deuxième extension 26 sensiblement plane disposée pour coopérer avec une deuxième face, distincte de la première face, des deux faces principales adjacentes libres du longeron latéral avec lequel le dispositif 1 d'assemblage est destiné à coopérer. Selon ces modes de réalisation, la deuxième face des deux faces adjacentes libres du longeron latéral est une face principale inférieure du longeron latéral. Selon ces modes de réalisation, la deuxième face des deux faces adjacentes libres du longeron latéral est une face principale du longeron latéral, s'étendant dans un plan sensiblement orthogonal à l'axe Z du repère orthonormé direct.

Le dispositif 1 d'assemblage selon l'invention présente un repliement 34 raidisseur orienté dans un plan orthogonal à l'axe X choisi pour permettre un renforcement de la rigidité en flexion, notamment selon l'axe 15 d'allongement de ladite rainure 6 transversale.

Le dispositif 1 d'assemblage présente aussi une portion 13 de surface d'assemblage par soudage l'un au contact de l'autre, du dispositif 1 d'assemblage et d'un élément 4 d'ancrage d'un train 18 arrière du véhicule 20 automobile au châssis 21 de ce véhicule 20 automobile. Cette portion 13 de surface d'assemblage par soudage du dispositif 1 d'assemblage et de l'élément 4 d'ancrage du train 18 arrière s'étend dans un plan orthogonal à l'axe 15 d'allongement de ladite rainure 6 transversale et à l'autre des extrémités terminales du dispositif 1 d'assemblage, opposée à l'extrémité 42 libre de ladite rainure 6 transversale. La portion 13 de surface d'assemblage par soudage du dispositif 1 d'assemblage et de l'élément 4 d'ancrage est formée par une pluralité d'extensions 28 s'étendant à partir d'un bord, dit bord 27 d'ancrage du train arrière, dudit dégagement 5 longitudinal, ledit bord 27 d'ancrage du train arrière n'étant pas destiné à être en contact et être fixé au longeron 2 latéral. Les extensions 28 d'ancrage du train arrière s'étendent dans un plan sensiblement orthogonal à l'axe 15 d'allongement de ladite rainure 6 transversale et contribuent, du fait des repliements dudit bord 27 d'ancrage, à la rigidité du dispositifs 1 d'assemblage.

Le dispositif 1 d'assemblage présente aussi une surface 7 de solidarisation par soudage du dispositif 1 d'assemblage avec un organe 8 d'appui arrière pour un cric de levage du véhicule 20 automobile. La surface 7 de solidarisation du dispositif 1 d'assemblage et de l'organe 8 d'appui est sensiblement plane et s'étend sur une portion de face 22 principale convexe du dispositif 1 d'assemblage, opposée à la face 23 principale concave du dispositif 1 d'assemblage. La surface 7 de solidarisation s'étend sensiblement dans un plan orthogonal à l'axe Z du repère orthonormé direct et est sensiblement horizontale. Ledit bord 27 d'ancrage de la surface 7 de solidarisation présente aussi au moins un bord 31 tombé contribuant, surabondamment du fait de ces repliements, à la rigidité en flexion du dispositif 1 d'assemblage. La rigidité du dispositif 1 d'assemblage et de la structure du véhicule 20 automobile est renforcée et la compacité du dispositif 1 d'assemblage et de l'élément 4 d'ancrage du train 18 arrière au châssis 21 est préservée.

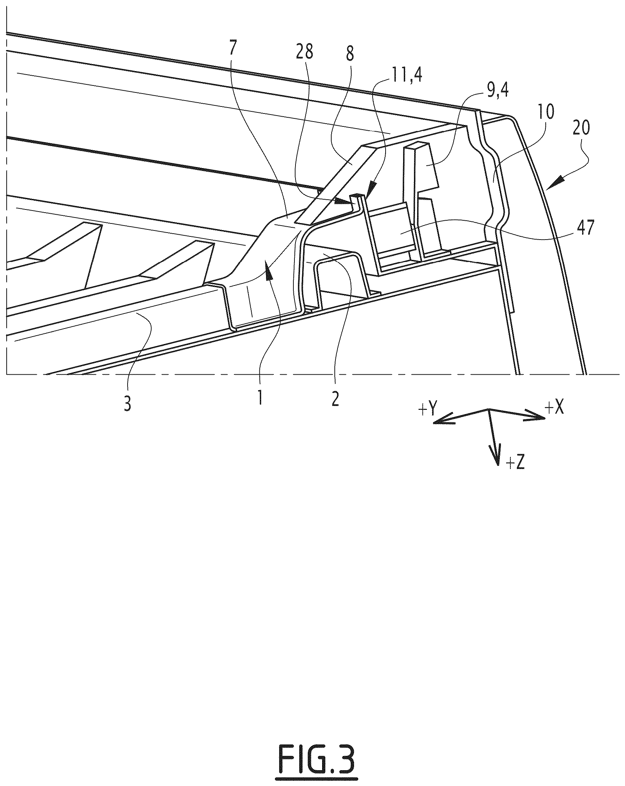

Un ensemble 12 selon l'invention comprenant un dispositif 1 d'assemblage est représenté en figure 3 en coupe transversale selon un plan orthogonal à l'axe X du repère orthonormé direct. L'ensemble 12 comprend le dispositif 1 d'assemblage fixé à la traverse 3 et au longeron 2 latéral, un organe 8 d'appui arrière pour un cric de levage du véhicule 20 automobile, l'organe 8 d'appui étant monté solidaire du dispositif 1 d'assemblage par soudure sur la surface 7 de solidarisation du dispositif 1 d'assemblage. L'organe 8 d'appui est aussi fixé par soudure sur un bavolet 10 du véhicule 20 automobile. L'ensemble 12 comprend aussi un élément 4 d'ancrage d'un train 21 arrière du véhicule 20 automobile au châssis 2,3 du véhicule 20 automobile. L'élément 4 d'ancrage du train arrière est formé d'une ailette 11 interne et d'un renfort 9 externe supportant un arbre 47 adapté pour coopérer avec un palier d'un bras 32 de suspension. Dans le mode de réalisation représenté, l'ailette 11 interne est fixée par soudage à une extension 28 dudit bord 27 d'ancrage du dispositif 1 d'assemblage. Rien n'empêche de prévoir que l'ailette 11 interne soit aussi fixée par soudage à l'une des faces principales du longeron 2 latéral. Dans le mode de réalisation représenté, le renfort 9 externe est fixé par soudure à l'organe 8 d'appui arrière pour un cric de levage. Selon un mode de réalisation particulier, les assemblages par soudages sont des assemblages par soudage par point. La rigidité de l'ensemble 12 selon l'invention et sa compacité permettre d'optimiser l'espace disponible pour des batteries électriques et/ou des bouteilles de dihydrogène d'alimentation d'une pile à combustible d'un véhicule 20 électrique. En outre, il est à noter que le dispositif 1 d'assemblage intégré dans l'ensemble 12 comprenant le dispositif 1 d'assemblage permet, du fait de la surface 7 de solidarisation sensiblement plane, au véhicule 20 automobile en cours de montage sur une chaine de montage d'être supportée par une luge de convoyage.

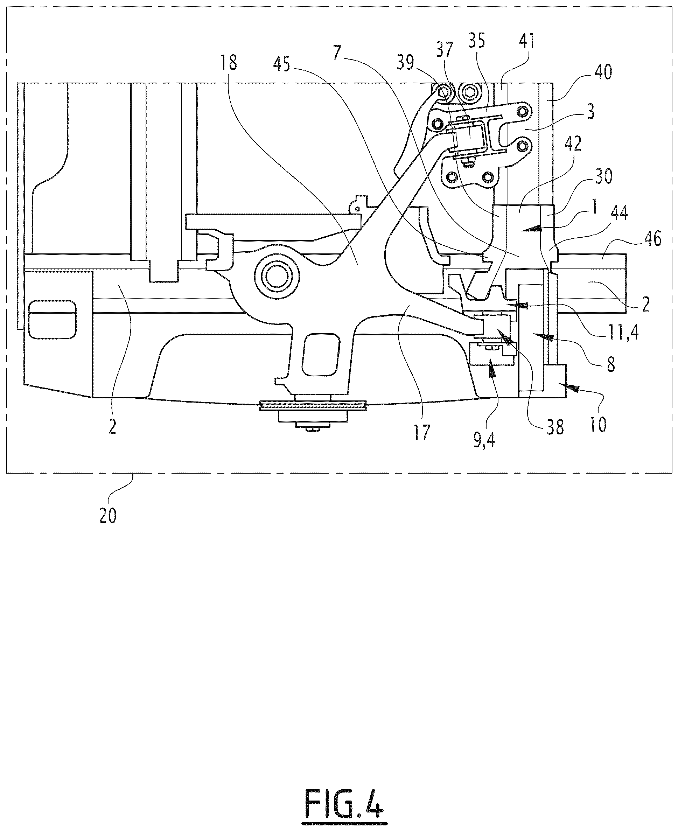

Un détail d'un ensemble 12 d'un véhicule 20 automobile selon l'invention est représenté en vue de dessous à plat en figure 4. Le véhicule 20 automobile présente un longeron 2 latéral s'étendant selon l'axe X du repère orthonormé direct et une traverse 3 s'étendant selon l'axe Y du repère orthonormé direct. Le longeron 2 latéral et la traverse 3 constituent des éléments de structure du châssis 21 du véhicule 20 automobile. Comme il peut être observé en figure 4 (sur la droite de la figure 4), un espace libre est ménagé à l'avant du train 18 arrière du véhicule 20 électrique pour pouvoir recevoir des batteries 24 électriques. Le train 18 arrière du véhicule 20 électrique représenté en figure 4 comprend un premier bras 17 de suspension terminé vers l'avant par une bague 38 cylindrique d'articulation comprenant un palier d'articulation permettant une liaison pivot entre l'extrémité 38 du bras 17 de suspension et un premier élément, dit point A, de fixation du train 18 arrière au châssis 21. Un deuxième bras du triangle de suspension se termine vers l'avant par une bague 37 cylindrique d'articulation comprenant un palier d'articulation permettant une liaison pivot entre l'extrémité 37 du deuxième bras de suspension et un deuxième élément 35, dit point B, de fixation complémentaire du train 18 arrière au châssis 2,3,21. L'extrémité du bras 17 de suspension forme un cylindre creux de réception d'un palier coopérant avec un arbre 47 soutenu par l'ailette 11 interne et le renfort 9 externe de l'élément 4 d'ancrage du train arrière du véhicule automobile d'un train 18 arrière du véhicule 20 électrique au châssis 2,3,21 de ce véhicule électrique. Le dispositif 1 d'assemblage, le longeron 2, la traverse 3, l'ailette 11 interne de l'élément 4 d'ancrage du train 18 arrière du véhicule 20 électrique au châssis 2,3,21 de ce véhicule électrique, le renfort 9 externe de cet élément 4 d'ancrage du train 18 arrière du véhicule 20 électrique, l'organe 8 d'appui arrière pour un cric de levage et le bavolet 10, ces éléments étant liés par soudage, procurent un ancrage rigide et compact du train 18 arrière d'un véhicule 20 électrique au châssis 21 de ce véhicule 20 électrique.

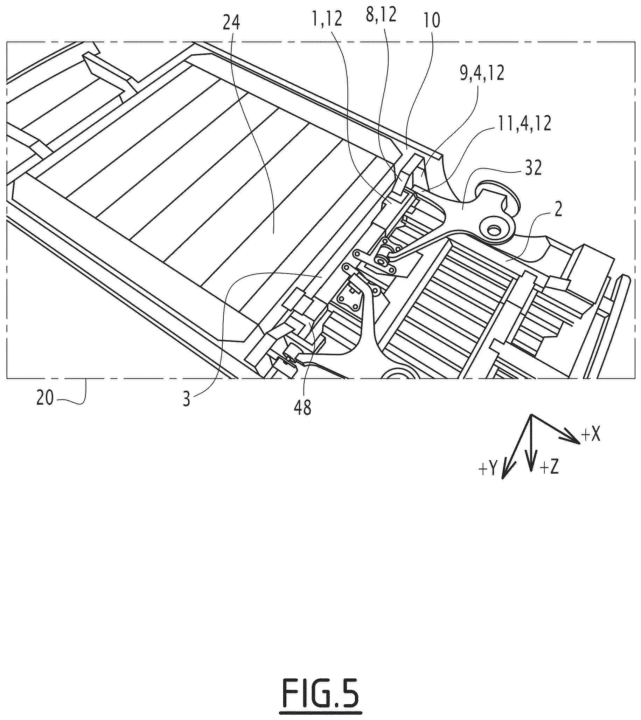

L'ensemble 12 selon l'invention comprend le dispositif 1 d'assemblage. Il comprend aussi une ailette 11 interne et un renfort 9 externe formant un organe 4 d'ancrage du train 18 arrière au châssis 2,3,21 du véhicule 20 électrique. Les termes « interne » et « externe » qualifiant l'ailette et le renfort respectivement, sont définis en référence à la distance séparant l'ailette et le renfort d'un plan médian du véhicule, orthogonal à l'axe Y du repère orthonormé direct, l'ailette interne étant plus proche de ce plan médian que le renfort externe. L'ensemble 12 selon l'invention comprend aussi un organe 8 d'appui arrière pour un cric de levage fixé par soudage sur la surface 7 de solidarisation du dispositif 1 d'assemblage. L'organe 8 d'appui est orienté selon un plan sensiblement orthogonal à l'axe X du repère orthonormé direct et en position légèrement avancée (selon l'axe X du repère orthonormé direct) par rapport à un plan médian du premier tronçon 42 formant l'extrémité libre de ladite rainure 6 transversale. Du fait de cette position légèrement avancée de l'organe 8 d'appui, l'élément 4 d'ancrage du train 18 arrière peut être rapproché de ce plan médian, de sorte que la compacité, notamment la compacité selon l'axe X du repère orthonormé direct, de l'ensemble 12 selon l'invention est optimisée. L'ailette 11 interne et le renfort 9 externe de l'élément 4 d'ancrage sont soudés à l'organe 8 d'appui, l'ailette 11 interne étant en outre soudée avec le longeron 2 latéral et avec le dispositif 1 d'assemblage. L'organe 8 d'appui est en outre soudé au bavolet 10. Il en résulte une compacité de l'ensemble 12 optimisée et une rigidité de l'ensemble 12 permettant la mise en place de batteries 24 électrique, comme représenté en figure 5.

Comme représenté en figure 4, le dispositif 1 d'assemblage selon l'invention comprend un premier tronçon 42 d'extrémité terminale libre adapté pour former ladite rainure transversale et présentant une extension 30 avant fixée par une soudure par point à un rebord 40 avant de la traverse 3 et une extension 39 arrière fixée par une soudure par point à un rebord 41 arrière de la traverse 3. Le dispositif 1 d'assemblage selon l'invention comprend un deuxième tronçon 43 évasé à partir du premier tronçon 42 jusqu'audit dégagement 5 longitudinal et présentant une extension 44 avant fixée par une soudure par point à un rebord 46 du longeron 2 latéral et une extension 45 arrière fixée par une soudure par point au rebord 46 du longeron 2 latéral.

Une vue générale d'un ensemble 12 d'un véhicule 20 électrique selon l'invention est représenté en vue de dessous à plat en figure 5. Les élément 24 de batteries électriques du véhicule 20 électrique sont disposées en plancher en avant de l'ensemble 12 gauche du véhicule et de l'ensemble 48 droit du véhicule 20. L'ensemble 48 est symétrique de l'ensemble 12 par rapport au plan médian du véhicule 20 et ses éléments constitutifs ne sont pas à nouveau détaillés mais reprennent les fonctionnalités, propriétés et avantages procurés par l'ensemble 12.

## Revendications

1. Dispositif (1) d'assemblage d'un longeron (2) latéral et d'une traverse (3) de châssis d'un véhicule automobile, ledit dispositif (1) d'assemblage étant formé d'une seule pièce métallique rigide, **caractérisé en ce que** le dispositif (1) d'assemblage présente une portion (13) de surface d'assemblage par soudage l'un au contact de l'autre, du dispositif (1) d'assemblage et d'un élément (4) d'ancrage d'un train (18) arrière du véhicule automobile au châssis (2,3,21) de ce véhicule automobile.

2. Dispositif (1) d'assemblage selon la revendication 1, **caractérisé en ce qu'**il forme un dégagement, dit dégagement (5) longitudinal, adapté pour pouvoir recevoir ledit longeron latéral, pour pouvoir coopérer par coopération de forme avec ledit longeron (2) latéral et pour pouvoir solidariser le dispositif (1) d'assemblage avec ledit longeron (2) latéral par soudage du dispositif (1) d'assemblage et dudit longeron (2) latéral l'un avec l'autre.

3. Dispositif (1) d'assemblage selon l'une des revendications 1 ou 2, **caractérisé en ce qu'**il forme une rainure, dite rainure (6) transversale, adaptée pour pouvoir recevoir la traverse (3), pour coopérer en coopération de forme avec la traverse (3) et pour pouvoir solidariser le dispositif (1) d'assemblage avec la traverse (3) par soudage du dispositif (1) d'assemblage et de la traverse (3) l'un avec l'autre.

4. Dispositif (1) d'assemblage selon l'une des revendications 1 à 3, **caractérisé en ce que** le dispositif (1) d'assemblage présente une surface (7) de solidarisation par soudage du dispositif (1) d'assemblage avec un organe (8) d'appui arrière pour un cric de levage du véhicule automobile.

5. Dispositif (1) d'assemblage selon la revendication 4, **caractérisé en ce que** l'élément (4) d'ancrage comprend une ailette (11) interne assemblée par soudure au dispositif (1) d'assemblage et un renfort (9) externe, l'ailette (11) interne et le renfort (9) externe de l'élément (4) d'ancrage étant adaptés pour recevoir et maintenir un palier (16) d'extrémité de fixation d'un bras (17) de suspension du train arrière (18) du véhicule (20) automobile au châssis (2,3) de ce véhicule (20) automobile, l'organe (8) d'appui et le renfort (9) externe étant montés solidaires l'un de l'autre par soudage.

6. Dispositif (1) d'assemblage selon l'une des revendications 4 ou 5, **caractérisé en ce que** l'organe (8) d'appui est monté solidaire par soudage avec au moins un organe choisi parmi un bavolet (10) et un brancard de ce véhicule automobile.

7. Ensemble (12) comprenant un dispositif (1) d'assemblage selon l'une des revendications 1 à 6, **caractérisé en ce qu'**il comprend en outre :
- un élément (4) d'ancrage d'un train (18) arrière de ce véhicule (20) automobile au châssis (2,3) du véhicule automobile, l'élément (4) d'ancrage étant monté solidaire du dispositif (1) d'assemblage par soudage ;
- un organe (8) d'appui arrière pour un cric de levage du véhicule automobile, l'organe (8) d'appui étant monté solidaire du dispositif (1) d'assemblage par soudage.

8. Véhicule (20) automobile comprenant au moins un dispositif (1) d'assemblage selon l'une des revendications 1 à 6 ou au moins un ensemble (12) selon la revendication 7.

9. Véhicule (20) automobile selon la revendication 8, **caractérisé en ce que** le véhicule (20) automobile est un véhicule électrique ou hybride.

10. Véhicule (20) automobile selon l'une des revendications 8 ou 9, **caractérisé en ce que** le véhicule (20) automobile est un véhicule électrique doté de batteries électriques ou d'une pile à combustible et d'au moins une bouteille de dihydrogène.

11. Véhicule (20) automobile selon l'une des revendications 8 à 10, **caractérisé en ce que** le véhicule (20) automobile est un véhicule utilitaire.
